# EUROPEAN PATENT SPECIFICATION

(11) **EP 4 124 802 B1**
(45) Date of publication and mention of the grant of the patent: **19.07.2023**
(21) Application number: 21188760.9
(22) Date of filing: 30.07.2021
(51) Int. Cl.: F24D 19/10, G05D 23/02

(54) **THERMOSTATIC VALVE ATTACHMENT**
THERMOSTATVENTILBEFESTIGUNG
FIXATION DE SOUPAPE THERMOSTATIQUE

(43) Date of publication of application: 01.02.2023
(73) Proprietor: Danfoss A/S, 6430 Nordborg (DK)
(72) Inventor: Voigt, Soren Tellefsen Herold, 6430 Nordborg (DK); Frederiksen, Bjarne, 6430 Nordborg (DK); Clausen, Anders Østergaard, 6430 Nordborg (DK)
(74) Representative: Keil & Schaafhausen Patentanwälte PartGmbB

(56) References cited:
- EP-A2- 1 701 235
- GB-A- 2 462 537
- US-A- 5 143 286

## Description

The invention relates to a thermostatic valve attachment having a stationary part, a fixture geometry with which it is connectable to a radiator valve and a handle, wherein the handle is rotatable relatively to the stationary part, wherein the handle comprises an inner handle and an outer handle, wherein the inner handle and the outer handle are connected to each other.

Such a thermostatic valve arrangement is known, for example, from EP 1 701 235 A1.

A thermostatic valve attachment is an element through which radiator valve can be adjusted. The stationary part of the thermostatic valve attachment can be connected in an axially and rotatory fixed manner to the radiator valve by the fixture geometry. Further, the thermostatic valve attachment comprises adjusting means, which adapt a position of the radiator valve according to a set value with regard to a current air temperature around the radiator valve. The adjusting means are provided in the stationary part, wherein the stationary part is connected to the fixture geometry.

GB 2 462 537 A shows a thermostatic control head for a flow valve. The control head comprises a base and a housing, wherein the housing can be rotated with respect to the base.

US 5 143 286 A shows another thermostatic valve having a stationary part and a handle.

The set value is adjusted by turning the handle, which results in an adjustment of the radiator valve position.

In certain arrangements it is quite difficult to turn the handle due to space limitations. In a different arrangement, the thermostatic valve attachment shall be operated by a limited number of persons, such that the handle can be operated using special tools only. Apart from these situations, further situations may exist which require an easy adaptation of the handle.

In order to adapt different handle requirements for thermostatic valve attachments the problem underlying is to provide a thermostatic valve attachment whose handle can be adapted easily.

This problem is solved by the features of claim 1.

The outer handle is operated by an user, while the outer handle is connected on its interior to the inner handle, such that movements of the outer handle are transferred to the inner handle and thus to the adjusting means of the thermometer. As a result, there are just few requirements of the geometry of the outer handle, namely a connecting geometry to the inner handle. Apart from the connecting geometry, the form and shape of the outer handle is not limited. Thus, the shape and geometry of the outer handle can be adapted as required.

Further, in case the outer handle is not able to fulfill its function, the outer handle can be easily replaced. This allows a cost-effective repair of the thermostatic valve attachment.

The inner handle and the outer handle are connected via a snap connection. A snap connection is a form-fit connection. This allows an easy assembly of the handles.

In an embodiment of the invention, the inner handle is connected to the outer handle in a rotationally fixed and axially fixed manner. Thus, the inner handle is moved simultaneous to any movement of the outer handle. This arrangement allows a precise control of the thermostatic valve attachment.

In an embodiment of the invention, the inner handle is connected to the adjusting means by a snap connection. As described above, adjusting means adapt a position of the radiator valve according to a set value with regard to a current air temperature. The snap connection is a form-fit connection which is easily implementable and easy to install.

In an embodiment of the invention, the outer handle partly covers at least one vent of the inner handle. Vents describe breakthroughs of the inner handle, through which air flows in order to let the adjusting means adapt the position of the radiator valve in a proper way. By adjusting the coverage of the vents, an air flow to the adjusting means can be adjusted. This allows a defined air flow to the adjusting means, such that the thermostatic valve attachment can be controlled finely.

In one embodiment of the invention, the outer handle comprises dent-projections. Dent-projections allow a good grip of the outer handle by the operator.

The outer handle could be made in one material or a combination of materials and be manufactured in a molding process or a printing process.

In one embodiment of the invention, the outer handle is 3D-printed. 3D-print is an additive manufacturing method. It allows a construction of a three-dimensional object from a 3D- model. Using the 3D- printing method allows manufacturing almost any shape of the outer handle, such that even complex shapes can be manufactured cost effective.

In one embodiment of the invention, the outer handle comprises protection means to protect the stationary part and/or the inner handle and/or the adjusting means from exterior impact. The protection means can be for example a predetermined breaking point or a like. Thus, just the outer handle breaks in case of an impact protecting the remaining parts of the thermostatic valve attachment. The outer handle can be replaced easily and cost effective. It can be even 3D- printed by the repair person such that a replacement is quickly available.

In one embodiment of the invention, outer handle is formed ergonomically. An ergonomic design relates to the design which makes it comfortable and effective for people to use it. This allows a good grip and an easy operation of the thermostatic valve attachment for different people, for example people having handicaps or kids. Good grip an operation could be implemented bye for example having one or more projections and or depressions and or the outer handle could be fully or partly made of an elastic material in order to allow better gripping. Further, the outer handle can be formed such that it easy to clean. The easy to clean outer handle can be put for example in dish washers, such that its surface is clean and disinfected. This allows the use of the outer handle in various highly hygiene facilities, such as hospitals or alike.

In one embodiment of the invention, the inner handle and/or the outer handle are connected to an end cap. The end-cap is basically provided on the opposite end to the fixture geometry, wherein the end-cap can be provided with a label, an advertisement or the like.

In the following, exemplary embodiments of the invention will be described with reference to the drawings, in which:
- Fig.1: a thermostatic valve attachment;
- Fig. 2: a thermostatic valve attachment without an outer handle;
- Fig. 3: an outer handle;
- Fig. 4: an inner handle;
- Fig. 5: a variety of outer handles;
- Fig. 6: an explosion view of a thermostatic valve attachment having an inner handle, an end cap and an outer handle.

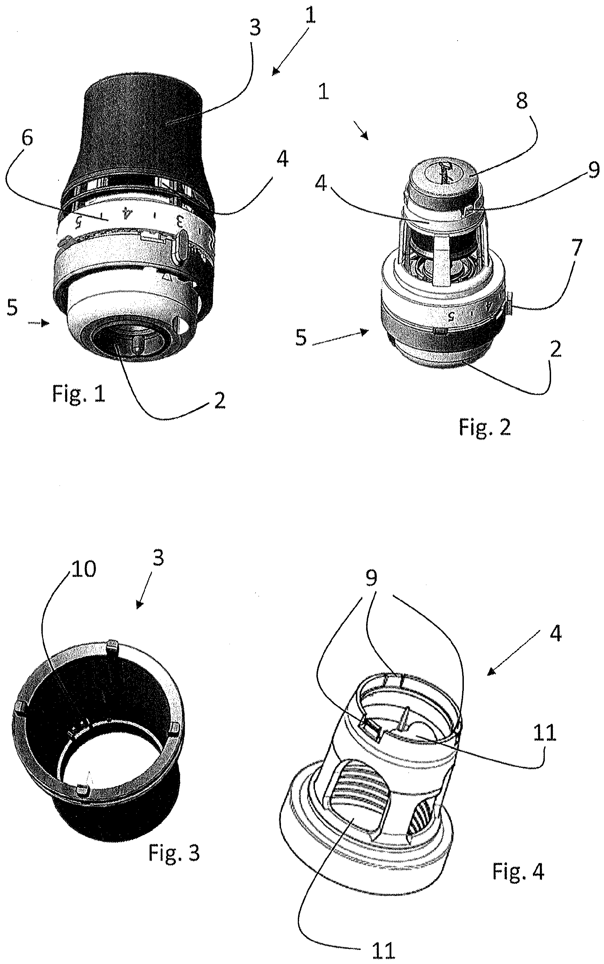

Fig. 1 depicts a thermostatic valve attachment 1 having a fixture geometry 2 with which the thermostatic valve attachment 1 can be mounted to a not depicted radiator valve. The thermostatic valve attachment 1 comprises an outer handle 3, an inner handle 4 and a stationary part 5, wherein the handles 3, 4 are connected to each other by a snap connection, and wherein the inner handle 4 is connected to the stationary part 5 by a snap connection as well. The handles 3, 4 are rotatable mounted onto the stationary part 5 and by operating the outer handle 3 the radiator valve is adjusted to a achieve a desired air temperature. The temperature can be adjusted based on a scale 6 provided on the inner handle 4 and an indicator 7 provided on the stationary part 5.

The fixture geometry 2 is attached to the stationary part 5. The stationary part 5 comprises a not depicted thermostatic element which interacts with the radiator valve.

Fig. 2 depicts a thermostatic valve attachment 1 comprising the stationary part 5 with an indicator 7 and the inner handle 4 with a scale 6. On a first end of the thermostatic valve attachment 1 the fixture geometry 2 is provided while on a second end of the thermostatic valve attachment 1 an end cap 8 is provided. The end-cap 8 is connected to the inner handle 4. The end-cap could also be part of or fully integrated into the outer handle.

As shown in Fig. 2, the inner handle 4 comprises a first snap connector 9, which interacts with a second snap connector 10 provided in the outer handle 3 as shown in Fig. 3. The snap connection could of course also be made in the opposite end of the outer handle 3 or integrated in the end cap 8 if the end cap 8 is integrated into the outer handle 3. The outer handle 3 can be manufactured by a 3D-printer, wherein a shape of the outer handle 3 can be adjusted to any requirements. When designing the outer handle 3, attention must be paid to connection points to the inner handle 4 and to air ventilation of the interior of the inner handle 4. Apart from these two limitations, the design process of the outer handle 3 is basically free. Further, the outer handle 3 can comprise not depicted predefined breaking means such that the outer handle 3 breaks in case of an exterior impact instead of destroying the thermostatic valve attachment 1 or an essential element such as the fixing geometry 2, the adjusting means, or alike.

The thermostat shown on Fig. 2 is a fully functional radiator thermostat, with all features for adjusting the associated valve to a set temperature (by turning the inner handle 4), min max temperature setting, etc.

Fig.4 shows an inner handle 4 having first snap connectors 9 and vents 11 allowing air ventilation to a not depicted thermal expansion element (for example a bellows containing a fluid or a gas), which is part of not depicted adjusting means.

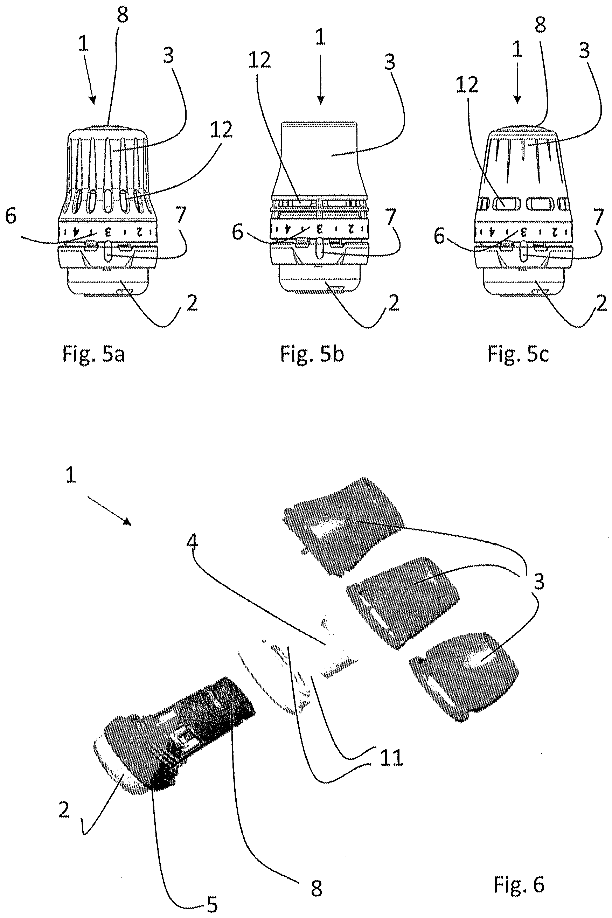

Figs. 5A - C depict thermostatic valve attachments 1 having different outer handles 3. The outer handles 3 differ in their shapes. Apart from the outer handles 3, the depicted thermostatic valve attachments 1 are the same. The outer handles 3 comprise openings 12, such that vents 11 of the inner handle 4 are partly covered, allowing an air ventilation within the interior of the inner handle 4.

Fig. 6 depicts an explosion view of a thermostatic valve attachment 1 having different outer handles 3, an inner handle 4, an end cap 8, a stationary part 5 and a fixture geometry 2. In this embodiment, the end cap 8 is directly mounted onto the stationary part 5, such that the end cap 8 is provided in the interior of the inner handle 4 in an assembled status. The outer handle 3 accommodates the inner handle 4 and the end cap 8.

One of the in Fig. 6 depicted outer handles 3 comprises dent-projections, while the second one is conical in shape, and the third one reassembles a doorknob. These shapes are just few of possible shapes, which can be 3D-printed. When designing the shape and choosing the material of the outer handle 3, attention can be brought to an ergonomic shape and an easy to clean surface. The outer handle can also be printed in different colors or printed with a pattern or a picture (car, lego brick, animal, etc).

### Reference list

- 1: thermostatic valve attachment
- 2: fixture geometry
- 3: outer handle
- 4: inner handle
- 5: stationary part
- 6: scale
- 7: indicator
- 8: end cap
- 9: first snap connector
- 10: second snap connector
- 11: vents
- 12: openings

## Claims

1. Thermostatic valve attachment (1) having a stationary part (5), a fixture geometry (2) with which it is connectable to a radiator valve and a handle which is rotatable relatively to the stationary part (5), wherein the handle comprises an inner handle (4) and an outer handle (3), wherein the inner handle (4) and the outer handle (3) are connected to each other, **characterized in that** the inner handle (4) and the outer handle (3) are connected via a snap connection comprising first snap connectors (9) of the inner handle (4) and second snap connectors (10) in the outer handle (3).

2. Thermostatic valve attachment (1) according to claim 1, **characterized in that** the inner handle (4) is connected to the outer handle (3) in a rotationally fixed and axially fixed manner.

3. Thermostatic valve attachment (1) according to claim 1 or 2, **characterized in that** the inner handle (4) is connected to adjusting means.

4. Thermostatic valve attachment (1) according to any of claims 1 to 3, **characterized in that** the inner handle (4) is connected to the adjusting means by a snap connection.

5. Thermostatic valve attachment (1) according to any of claims 1 to 4, **characterized in that** the outer handle (3) partly covers at least one vent (11) of the inner handle (4).

6. Thermostatic valve attachment (1) according to any of claims 1 to 5, **characterized in that** the outer handle (3) comprises dent-projections.

7. Thermostatic valve attachment (1) according to any of claims 1 to 6, **characterized in that** the outer handle (3) is 3D- printed.

8. Thermostatic valve attachment (1) according to any of claims 1 to 7, **characterized in that** the outer handle (3) comprises protection means, to protect the stationary part (5) and/or the inner handle (4) and/or the adjusting means from exterior impact.

9. Thermostatic valve attachment (1) according to any of claims 1 to 8, **characterized in that** the outer handle (3) is formed ergonomically.

10. Thermostatic valve attachment (1) according to any of claims 1 to 9, **characterized in that** the inner handle (4) or the outer handle (3) comprises a fixing means for an end cap (8).

## Patentansprüche

1. Thermostatventilaufsatz (1) mit einem feststehenden Teil (5), einer Befestigungsgeometrie (2), mit der er mit einem Heizkörperventil verbindbar ist, und einem Griff, der relativ zum feststehenden Teil (5) drehbar ist, wobei der Griff einen inneren Griff (4) und einen äußeren Griff (3) aufweist, wobei der innere Griff (4) und der äußere Griff (3) miteinander verbunden sind, **dadurch gekennzeichnet, dass** der innere Griff (4) und der äußere Griff (3) über eine Schnappverbindung verbunden sind, welche erste Schnappverbinder (9) des inneren Griffs (4) und zweite Schnappverbinder (10) im äußeren Griff (3) aufweisen.

2. Thermostatventilaufsatz (1) nach Anspruch 1, **dadurch gekennzeichnet, dass** der innere Griff (4) mit dem äußeren Griff (3) drehfest und axial fest verbunden ist.

3. Thermostatventilaufsatz (1) nach Anspruch 1 oder 2, **dadurch gekennzeichnet, dass** der innere Griff (4) mit Einstellmitteln verbunden ist.

4. Thermostatventilaufsatz (1) nach einem der Ansprüche 1 bis 3, **dadurch gekennzeichnet, dass** der innere Griff (4) mit den Einstellmitteln durch eine Schnappverbindung verbunden ist.

5. Thermostatventilaufsatz (1) nach einem der Ansprüche 1 bis 4, **dadurch gekennzeichnet, dass** der äußere Griff (3) mindestens eine Entlüftung (11) des inneren Griffs (4) teilweise abdeckt.

6. Thermostatventilaufsatz (1) nach einem der Ansprüche 1 bis 5, **dadurch gekennzeichnet, dass** der äußere Griff (3) Vorsprünge aufweist.

7. Thermostatventilaufsatz (1) nach einem der Ansprüche 1 bis 6, **dadurch gekennzeichnet, dass** der äußere Griff (3) 3D-gedruckt ist.

8. Thermostatventilaufsatz (1) nach einem der Ansprüche 1 bis 7, **dadurch gekennzeichnet, dass** der äußere Griff (3) Schutzmittel umfasst, um das stationäre Teil (5) und/oder den inneren Griff (4) und/oder die Einstellmittel vor äußeren Einwirkungen zu schützen.

9. Thermostatventilaufsatz (1) nach einem der Ansprüche 1 bis 8, **dadurch gekennzeichnet, dass** der äußere Griff (3) ergonomisch geformt ist.

10. Thermostatventilaufsatz (1) nach einem der Ansprüche 1 bis 9, **dadurch gekennzeichnet, dass** der innere Griff (4) oder der äußere Griff (3) eine Befestigungseinrichtung für eine Endkappe (8) aufweist.

## Revendications

1. Fixation de soupape thermostatique (1) présentant une partie fixe (5), une géométrie de corps (2) avec laquelle elle peut être connectée à une soupape de radiateur et une poignée qui est rotative par rapport à la partie fixe (5), dans laquelle la poignée comprend une poignée intérieure (4) et une poignée extérieure (3), dans laquelle la poignée intérieure (4) et la poignée extérieure (3) sont reliées l'une à l'autre, **caractérisée en ce que** la poignée intérieure (4) et la poignée extérieure (3) sont reliées par une connexion par encliquetage comprenant des premiers connecteurs par encliquetage (9) de la poignée intérieure (4) et des seconds connecteurs par encliquetage (10) dans la poignée extérieure (3).

2. Fixation de soupape thermostatique (1) selon la revendication 1, **caractérisée en ce que** la poignée intérieure (4) est reliée à la poignée extérieure (3) de manière fixe en rotation et fixe axialement.

3. Fixation de soupape thermostatique (1) selon la revendication 1 ou 2, **caractérisée en ce que** la poignée intérieure (4) est reliée à un moyen de réglage.

4. Fixation de soupape thermostatique (1) selon l'une quelconque des revendications 1 à 3, **caractérisée en ce que** la poignée intérieure (4) est reliée au moyen de réglage par une connexion par encliquetage.

5. Fixation de soupape thermostatique (1) selon l'une quelconque des revendications 1 à 4, **caractérisée en ce que** la poignée extérieure (3) couvre partiellement au moins un évent (11) de la poignée intérieure (4).

6. Fixation de soupape thermostatique (1) selon l'une quelconque des revendications 1 à 5, **caractérisée en ce que** la poignée extérieure (3) comprend des saillies d'indentation.

7. Fixation de soupape thermostatique (1) selon l'une quelconque des revendications 1 à 6, **caractérisée en ce que** la poignée extérieure (3) est imprimée en 3D.

8. Fixation de soupape thermostatique (1) selon l'une quelconque des revendications 1 à 7, **caractérisée en ce que** la poignée extérieure (3) comprend un moyen de protection, pour protéger la partie fixe (5) et/ou la poignée intérieure (4) et/ou le moyen de réglage d'un impact extérieur.

9. Fixation de soupape thermostatique (1) selon l'une quelconque des revendications 1 à 8, **caractérisée en ce que** la poignée extérieure (3) est formée de manière ergonomique.

10. Fixation de soupape thermostatique (1) selon l'une quelconque des revendications 1 à 9, **caractérisée en ce que** la poignée intérieure (4) ou la poignée extérieure (3) comprend un moyen de fixation pour un bouchon d'extrémité (8).
